(19) Europäisches Patentamt
European Patent Office
Office européen des brevets

(11) EP 4 411 847 A1

(12) EUROPEAN PATENT APPLICATION

(43) Date of publication:
**07.08.2024 Bulletin 2024/32**

(21) Application number: **23194384.6**

(22) Date of filing: **30.08.2023**

(51) International Patent Classification (IPC):
***H01M 4/02*** *(2006.01)* ***H01M 4/04*** *(2006.01)*
***H01M 4/134*** *(2010.01)* ***H01M 4/1395*** *(2010.01)*
***H01M 4/36*** *(2006.01)* ***H01M 4/38*** *(2006.01)*
***H01M 4/62*** *(2006.01)*

(52) Cooperative Patent Classification (CPC):
**H01M 4/622; H01M 4/0404; H01M 4/134; H01M 4/1395; H01M 4/364; H01M 4/366; H01M 4/386; H01M 4/624;** H01M 2004/027

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **06.02.2023 KR 20230015777**

(71) Applicant: **Samsung SDI Co., Ltd.**
**Yongin-si, Gyeonggi-do 17084 (KR)**

(72) Inventors:
- **LEE, Junkyu**
  **17084 Yongin-si (KR)**
- **YOO, Hana**
  **17084 Yongin-si (KR)**
- **DO, Uisong**
  **17084 Yongin-si (KR)**
- **IN, Jinhyuk**
  **17084 Yongin-si (KR)**
- **EOM, Hyeri**
  **17084 Yongin-si (KR)**
- **LEE, DongHun**
  **17084 Yongin-si (KR)**
- **CHAE, Wonhyung**
  **17084 Yongin-si (KR)**

(74) Representative: **Marks & Clerk LLP**
**15 Fetter Lane**
**London EC4A 1BW (GB)**

# (54) NEGATIVE ELECTRODE FOR RECHARGEABLE LITHIUM BATTERY AND RECHARGEABLE LITHIUM BATTERY INCLUDING SAME

(57) Disclosed is that a negative electrode for a rechargeable lithium battery and a rechargeable lithium battery including the same and the negative electrode for the rechargeable lithium battery including a current collector, a first negative active material layer positioned on at least one surface of the current collector; and a second negative active material layer positioned on the first negative active material layer, wherein the first negative active material layer is a non-oriented layer, the second negative active material layer is oriented layer, a DD (Degree of Divergence) value of the first negative active material layer and a DD value of the second negative active material layer have a relationship expressed in Equation 1 and the DD value is defined by Equation 2.

[Equation 1]

$$A \geq 10$$

(in Equation 1, A is the DD value of the second negative active material layer-the DD value of the first negative active material layer)

[Equation 2]

$$DD\ (\text{Degree of Divergence}) = (I_a/I_{total}) * 100$$

(in Equation 2,
$I_a$ is a sum of peak intensities at non-planar angles measured by XRD using a CuK$\alpha$ ray, and,

EP 4 411 847 A1

$I_{total}$ is a sum of peak intensities at all angles measured by XRD using a CuK$\alpha$ ray.)

FIG. 3

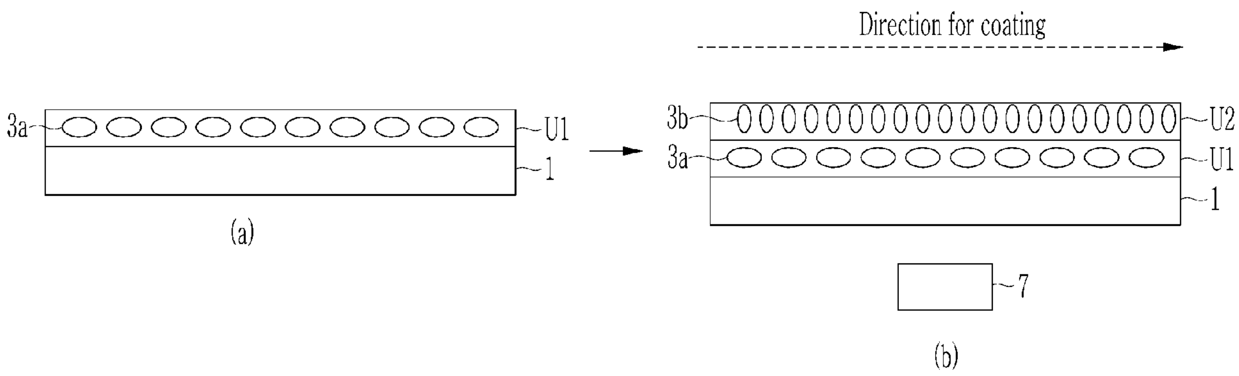

## Description

### BACKGROUND OF THE INVENTION

#### (a) Field of the Invention

It relates to a negative electrode for a rechargeable lithium battery and a rechargeable lithium battery including the same.

#### (b) Description of the Related Art

A rechargeable lithium battery which has recently drawn attention as a power source for small portable electronic devices, uses an organic electrolyte solution and thereby, has twice or more as high a discharge voltage as a conventional battery using an alkali aqueous solution and accordingly, high energy density.
As the negative active material for the rechargeable lithium battery, the investigation for a silicon negative active material with a high discharge specific capacity of 3400 mAh/g which is capable of rapidly bonding to lithium ions and enabling fast charging and discharging, have been actively undertaken.
However, silicon contracts and expands during charging and discharging, causing cracks to form, which leads to the deterioration of the cycle-life characteristics.

### SUMMARY OF THE INVENTION

One embodiment provides a negative electrode for a rechargeable lithium battery exhibiting high energy density and improved expansion characteristic.
Another embodiment provides a rechargeable lithium battery including the negative electrode.
One embodiment provides a negative electrode for a rechargeable lithium battery including a current collector, a first negative active material layer positioned on at least one surface of the current collector; and a second negative active material layer positioned on the first negative active material layer, wherein the first negative active material layer is a non-oriented layer, the second negative active material layer is an oriented layer, a DD (Degree of Divergence) value of the first negative active material layer and a DD value of the second negative active material layer have a relationship expressed in Equation 1, and the DD value is defined by Equation 2.

[Equation 1]

$$A \geq 10$$

(in Equation 1, A is the DD value of the second negative active material layer - the DD value of the first negative active material layer)

[Equation 2]

$$\text{DD (Degree of Divergence)} = (I_a/I_{total}) * 100$$

(in Equation 2,
$I_a$ is a sum of peak intensities at non-planar angles measured by XRD using a CuKa ray, and,
$I_{total}$ is a sum of peak intensities at all angles measured by XRD using a CuKa ray.)

A in Equation 1 may be about 10 to about 40.
The first negative active material layer may have a DD value of less than about 30, or the first negative active material layer may have a DD value of less than about 30, and about 10 or more.
The second negative active material layer may have a DD value of about 30 or more, or the second negative active material layer may have a DD value of about 30 to about 60.
The first negative active material layer may have a thickness of about 10 $\mu$m to about 30 $\mu$m.
The $I_a$ may be a sum of peak intensities at $2\theta$ = 42.4±0.2°, 43.4±0.2°, 44.6±0.2°, and 77.5±0.2° measured

by XRD using a CuKa ray, and the $I_{total}$ may be a sum of peak intensities at 2θ=26.5±0.2°, 42.4±0.2°, 43.4±0.2°, 44.6±0.2°, 54.7±0.2°, and 77.5±0.2° measured by XRD using a CuKa ray.

The peak intensities may be peak integral area values.

The first negative active material layer or second negative active material may include a crystalline carbon-based negative active material.

According to one embodiment, the first negative active material layer or the second negative active material layer may include a crystalline carbon-based negative active material and a Si-based negative active material. Herein, a mixing ratio of the crystalline carbon-based negative active material and the Si-based negative active material may be about 98 : 2 to about 90 : 10 weight ratio.

The Si-based negative active material may be Si, a Si-C composite, $SiO_x$ (0<x<2), Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof but not Si), or combinations thereof.

According to another embodiment, a rechargeable lithium battery includes the negative electrode, a positive electrode including a positive active material, and a non-aqueous electrolyte.

At least some of the above and other features of the invention are set out in the claims.

Other embodiments are included in the following detailed description.

A negative electrode for a rechargeable lithium battery according to one embodiment may exhibit high energy density and the improved expansion characteristic.

## BRIEF DESCRIPTION OF THE DRAWINGS

FIG. 1 is a schematic view showing orientations according to an embodiment.
FIG. 2 is a schematic view for orientations of the negative electrode according to one embodiment.
FIG. 3 is a schematic diagram showing the process for providing the orientation in the negative electrode preparation according to one embodiment.
FIG. 4 is a schematic view showing a structure of the rechargeable lithium battery according to one embodiment.
FIG. 5 is an image showing the separation of the negative electrode after fully-charging of the rechargeable lithium cell according to Comparative Example 2.

## DETAILED DESCRIPTION OF THE INVENTION

Hereinafter, embodiments of the present invention will be described in detail. However, the present invention is not limited to these embodiments and the present invention is defined by the scope of claims.

A term used in the specification is used to explain embodiments, but it is not intended to limited to the present invention. Expressions in the singular include a plurality of expressions unless the context clearly dictates otherwise.

The term "combination thereof" may include a mixture, a laminate, a complex, a copolymer, an alloy, a blend, a reactant of constituents.

The terms "comprise", "include" or "have" are intended to designate that the performed characteristics, numbers, steps, constituted elements, or a combination thereof is present, but it should be understood that the possibility of presence or addition of one or more other characteristics, numbers, steps, constituted element, or a combination is not precluded in advance.

Unless otherwise defined in the specification, when an element, such as a layer, a film, a region, a plate, and the like is referred to as being "on" or "over" another part, it may include cases where it is "directly on" another element, but also cases where there is another element in between.

In the specification, the term "A and/or B" includes A or B, or both.

When an element, such as a layer, a film, a region, a plate, and the like is referred to as being "on" or "over" another part, it may include cases where it is "directly on" another element, but also cases where there is another element in between. In contrast, when an element is referred to as being "directly on" another element, there are no intervening elements present.

In the present invention, "particle size", and "a particle diameter" may be an average a particle diameter. When a particle has a spherical shape, a size indicates a diameter and when a particle has a non-spherical shape, a size indicates a size of a longer axis.

When a definition is not otherwise provided in the specification, an average particle diameter indicates an average particle diameter (D50) where a cumulative volume is about 50 volume% in a particle distribution. The average particle diameter (D50) may be measured by a method well known to those skilled in the art, for example, by a particle

size analyzer, or by a transmission electron microscopic image, a scanning electron microscopic, or field emission scanning electron microscopy (FE-SEM). Alternatively, a dynamic light-scattering measurement device is used to perform a data analysis, and the number of particles is counted for each particle size range, and from this, the average particle diameter (D50) value may be easily obtained through a calculation, or a laser diffraction method. The laser diffraction may be obtained by distributing particles to be measured in a distribution solvent and introducing it to a commercially available laser diffraction particle measuring device (e.g., MT 3000 available from Microtrac, Ltd.), irradiating ultrasonic waves of about 28 kHz at a power of 60 W, and calculating an average particle diameter (D50) in the 50% standard of particle distribution in the measuring device.

A negative electrode for a rechargeable lithium battery according to one embodiment includes a current collector; a first negative active material layer positioned on at least one surface of the current collector; and a second negative active material layer positioned on the first negative active material layer. The first negative active material layer is a non-oriented layer and the second negative active material layer is an oriented layer. A DD (Degree of Divergence) value of the first negative active material layer and a DD value of the second negative active material layer have a relationship expressed in Equation 1. Herein, the DD value is defined by Equation 2.

[Equation 1]

$$A \geq 10$$

(in Equation 1, A is the DD value of the second negative active material layer-the DD value of the first negative active material layer)

[Equation 2]

$$DD\ (\text{Degree of Divergence}) = (I_a/I_{total}) * 100$$

in Equation 2,
$I_a$ is a sum of peak intensities at non-planar angles measured by XRD using a CuKa ray, and,
$I_{total}$ is a sum of peak intensities at all angles measured by XRD using a CuKa ray.

The non-planar angles denote 2θ = 42.4±0.2°, 43.4±0.2°, 44.6±0.2°, and 77.5±0.2° when measured by XRD using a CuKα ray, that is, a (100) plane, a (101)R plane, a (101)H plane, and a (110) plane. In general, graphite has a structure classified into a rhombohedral structure and a hexagonal structure having an ABAB type of stacking sequence according to a stacking order of graphene layers, and the R plane denotes the rhombohedral structure, while the H plane denotes the hexagonal structure.

Thus, the $I_a$ may be a sum of peak intensities at 2θ = 42.4±0.2°, 43.4±0.2°, 44.6±0.2°, and 77.5±0.2° measured by XRD using a CuKa ray.

The all angles denote 2θ = 26.5±0.2°, 42.4±0.2°, 43.4±0.2°, 44.6±0.2°, 54.7±0.2°, and 77.5±0.2° when measured by XRD using a CuKα ray, that is, a (002) plane, a (100) plane, a (101)R plane, a (101)H plane, a (004) plane, and a (110) plane. A peak at 2θ = 43.4±0.2° may also be considered to appear by overlapping a peak of a (101)R plane of a carbon-based material with another peak of a (111) plane of a current collector, for example, Cu.

Thus, the $I_{total}$ may be a sum of peak intensities at 2θ=26.5±0.2°, 42.4±0.2°, 43.4±0.2°, 44.6±0.2°, 54.7±0.2°, and 77.5±0.2° measured by XRD using a CuKa ray.

In general, peak intensity indicates a height of a peak or an integral area of the peak, and according to an embodiment, the peak intensity may indicate the integral area of a peak.

In one embodiment, the XRD is measured under a measurement condition of 2θ = 10° to 80°, a scan speed (°/S) of 0.044 to 0.089, and a step size (°/step) of 0.013 to 0.039 by using a CuKα ray as a target ray but removing a monochromator to improve a peak intensity resolution.

The DD value indicates that the negative electrode active material included in the negative active layer is oriented at a predetermined angle, and a larger value indicates that the negative electrode active material is well oriented. That is, as schematically shown in FIG. 1, as the DD value is increased, an angle (a) is increased when the negative active material 3 is oriented to one side of the substrate 1 with the angle (a). Furthermore, the DD value is maintained after charges and discharges.

In one embodiment, the first negative active material layer is a non-oriented layer, the second negative active

material layer is an oriented layer, and A expressed in Equation 1 is about 10 or more. That is, the DD value of the second negative active material layer is 10 or more higher than the DD value of the first negative active material layer. According to another embodiment, in Equation 1, A may be about 10 to about 40, or about 10 to about 30.

In the negative electrode according to one embodiment, the expansion and the orientation of the first and the second negative active material layer are illustrated with a reference of FIG. 2. The first negative active material layer (bottom layer) is a non-oriented layer, that is, a negative active material 3a is substantially horizontally and parallel to the current collector 1, so that the expansion of the negative electrode may occur in a vertical direction during charging and discharging of the battery, and the secondary negative active material layer (upper layer) is the oriented layer which indicates the negative active material 3b vertically stands to the current collector 1, so that the expansion of the negative electrode may occur in a horizontal and parallel direction to the current collector during charging and discharging of the battery. In FIG. 2, small circles included in the upper layer and the bottom layer may indicate a binder (or conductive material) included in the negative active material layer, which is not critical configuration for the orientation description, and thus, the description therefor is omitted.

Accordingly, when the rechargeable lithium battery including the negative electrode is charged and discharged, the first negative active material layer contacted with the current collector may be vertically expanded and the second negative active material layer may be horizontally expanded. Resultantly, based on the entire active material layer, the volume expansion may be effectively suppressed during charge and discharge of the battery, which may reduce the increase rate in thickness and prevent the separation of the active material layer from the current collector.

Such effects from the expansion direction of the first negative active material layer and the second negative active material layer may be more effectively obtained when the A value expressed in Equation 1 is about 10 or more, or about 10 to about 40, for example, about 10 to about 30. If the A value is less than 10, the effect for reducing expansion may be not realized.

The first negative active material layer and the second negative active material layer may include a crystalline carbon-based negative active material as a negative active material, and according to one embodiment, may include a crystalline carbon-based negative active material and a Si-based negative active material.

In the case of including the crystalline carbon-based negative active material and the Si-based negative active material, as the negative active material, the effects obtained by adjusting the expansion direction according to the position of the first negative active material layer and the second negative active material layer described above may be more increased. In the case of using the Si-based negative active material, the expansion mainly occurs in a horizontal direction to the current collector, which mainly causes the negative active material layer to separate from the current collector. As described above, the negative active material according to one embodiment may more effectively suppress the separation of the Si-based negative active material due to the horizontal direction, as the first negative active material directly contacting the current collector is substantially expanded in the vertical direction.

If the first negative active material layer and the second negative active material layer are both oriented layers, the first and second negative active material layer may be both expanded in the horizontal direction, which may cause the negative active material layer to separate, which is not appropriate. Furthermore, if the first negative active material layer is an oriented layer and the second negative active material layer is a non-oriented layer, the first negative active material layer may be horizontally expanded, which may cause the separation of the negative active material layer from the current collector.

In one embodiment, the crystalline carbon-based active material may be unspecified shaped (*i.e.* non-shaped), sheet-shaped, flake-shaped, spherically-shaped, fiber-shaped artificial graphite, natural graphite, or combinations thereof. For example, the crystalline carbon-based active material may be crystalline graphite.

The Si-based negative electrode active material may be Si, a Si-C composite, $SiO_x$ ($0<x<2$), Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), or combinations thereof.

The Si-C composite may include Si and a carbon-based material. The carbon-based material may be amorphous carbon or crystalline carbon. The composite, for example, may include a core including Si particles and a carbon-based material surrounded on the core. The core may further include a carbon-based material. For example, the Si-C composite may include a core in which Si particles and a first carbon-based material are mixed, and a second carbon-based material surrounded on the core. The first carbon-based material and the second carbon-based material may be the same or different from each other, and may be amorphous carbon or crystalline carbon. For example, the composite may include a secondary particle in which at least one Si nano particle primary particles and crystalline carbon are agglomerated, i.e, an agglomerated product, an amorphous carbon coating layer surrounding the agglomerated product, and amorphous carbon filled between the agglomerated products to locate and surround the primary particles.

The Si may have a particle diameter of about 10 nm to about 30 $\mu$m, and according to one embodiment, may have a particle diameter of about 10 nm to about 1000 nm, or according to another embodiment, may have a particle diameter of about 20 nm to about 150 nm. When the average particle diameter of the Si particle is within the range, the

volume expansion caused during charge and discharge may be suppressed, and a breakage of the conductive path due to crushing of particles during charge and discharge may be prevented.

In one embodiment, the mixing ratio of the crystalline carbon-based negative active material and the Si-based negative active material may be about 98 : 2 to about 95 : 5 weight ratio, or about 93 : 7 to about 90 : 10 weight ratio. When the mixing ratio of the crystalline carbon-based negative active material and the Si-based negative active material is within the ranges, the higher capacity and higher energy density effect may be obtained.

The amorphous carbon may be pitch carbon, soft carbon, hard carbon, mesophase pitch carbide, sintered cokes, carbon fiber, or a combination thereof, and the crystalline carbon may be unspecified-shaped, sheet-shaped, flake-shaped, spherically-shaped, fiber-shaped natural graphite, artificial graphite, or combinations thereof.

In one embodiment, the first negative active material layer, the non-oriented layer, may have a DD value of less than about 30, or less than about 30 and about 10 or more. The second negative active material layer may have a DD values of about 30 or more, or the second negative active material layer may have a DD value of about 30 to 60.

The first negative active material layer with a DD value of more than 30 does not exhibit the effects derived from vertical expansion of a non-oriented layer. Furthermore, if a DD value of the second negative active material layer is less than 30, the second negative active material layer corresponds to a non-oriented layer, or even if the second negative active material layer is an oriented layer, the effects related to expansion is minimal and not sufficient.

In one embodiment, the DD value is obtained by charging and discharging a rechargeable lithium battery including the negative electrode, disassembling the battery when fully discharged to obtain the negative electrode, and measuring an XRD about the negative electrode. Herein, the charge and discharge are once to twice performed at about 0.1 C to about 0.2 C. The DD value of the first active material layer is obtained by taking off the negative active material layer using a tape after charge and discharge and measuring an XRD of the active material layer attached to the current collector.

In one embodiment, a thickness of the first negative active material layer may be about 10 μm to about 30 μm. The first negative active material layer with the thickness within the range may have advantageous properties related to adhesion. The thickness may be a thickness of one side of the first negative active material layer. For example, the thickness may be a thickness of the first negative active material layer on one side of the current collector. If the first negative active material layers are formed on the both sides of the current collector, the entire thickness of the first negative active material layer included in the negative electrode may be about 20 μm to about 60 μm;

The thickness of the first negative active material layer refers to a thickness after compressing and vacuum-drying in the negative electrode preparation. The vacuum-drying may be performed under a pressure of about 0.03 atm to about 0.06 atm at about 100 °C to about 160 °C.

In one embodiment, the thickness of the second negative active material layer may be suitably controlled, but is not limited thereto.

In the first and the second negative active material layers, the amount of the first and the second negative active materials may be about 95 wt% to about 99 wt% based on the total weight of each layer, and resultantly, it may be about 95 wt% to about 99 wt% based on the total weight of the negative active material layer.

The first and the second negative active material layers may include a binder, and may further include a conductive material. In the first and second negative active material layers, each amount of the binder may be about 1 wt% to about 5 wt% based on the total weight of each negative active material layer. Furthermore, when the conductive material is further included, about 90 wt% to about 98 wt% of the negative active material, about 1 wt% to about 5 wt% of the binder, and about 1 wt% to about 5 wt% of the conductive material may be included.

The binder improves binding properties of negative active material particles with one another and with a current collector. The binder may be a non-aqueous binder, an aqueous binder, or a combination thereof.

The non-aqueous binder may be polyvinylchloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, polyamideimide, polyimide, or combinations thereof.

The aqueous binder may be a styrene-butadiene rubber, an acrylated styrene-butadiene rubber, acrylonitrile-butadiene rubber, an acryl rubber, a butyl rubber, an ethylene propylene copolymer, polyepichlorohydrin, polyphosphazene, polyacrylonitrile, polystyrene, an ethylene propylenediene copolymer, polyvinyl pyridine, chlorosulfonated polyethylene, latex, a polyester resin, an acryl resin, a phenol resin, an epoxy resin, polyvinyl alcohol, an acrylate-based resin, or combinations thereof.

When the aqueous binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metal may be Na, K, or Li. The thickener may be included in an amount of about 0.1 parts by weight to about 3 parts by weight based on 100 parts by weight of the negative electrode active material. Furthermore, the thickener may act as the binder.

The conductive material is included to provide electrode conductivity, and any electrically conductive material may be used as a conductive material unless it causes a chemical change. Examples of the conductive material may

be a carbon-based material such as natural graphite, artificial graphite, carbon black, acetylene black, ketjen black, a carbon fiber, and the like; a metal-based material of a metal powder or a metal fiber including copper, nickel, aluminium, silver, and the like; a conductive polymer such as a polyphenylene derivative; or a mixture thereof.

The current collector may include one selected from a copper foil, a nickel foil, a stainless steel foil, a titanium foil, a nickel foam, a copper foam, a polymer substrate coated with a conductive metal, and a combination thereof, but is not limited thereto.

The negative electrode according one embodiment may be prepared by applying a magnetic field when a negative active material composition is coated on a current collector. The negative electrode active material layer preparation will be described in more detail with reference to FIG. 3.

As shown in FIG. 3, first, a first negative active material layer composition including a first negative active material 3a is coated on a current collector and dried to prepare a first negative active material layer U1 (a). As the coating of the first negative active material layer composition is performed without using a magnet, the first negative active material layer is formed as a non-oriented layer. Thereafter, a magnet 7 is positioned under a current collector in which the first negative active material layer is formed, a second negative active material layer composition including a second negative active material 3b is coated on thereon and dried to prepare a second negative active material layer U2. The coating of the second negative active material layer composition is performed by moving the current collector in the direction of coating while the magnet 7 is positioned under the current collector. Accordingly, the magnetic field (magnetic flux) of the magnet is formed vertically with the current collector, but the magnetic field depending on the coating speed (a speed of moving the current collector) is formed at a predetermined angle as a vector function. Thus, the carbon-based negative active material included in the second negative active material layer composition stands, that is, is oriented as the predetermined angle to the current collector, and resultantly, the second negative active material layer is formed as an oriented layer.

If the first negative active material layer and the second negative active material layer composition are formed on the both sides of the current collector, the first negative active material layer is formed on one side of the current collector; the another first negative active material layer is formed on the corresponding side where the first active material layer is not formed, opposite to the side where the first negative active material layer is formed; and second negative active material layers are formed on the two first negative active material layers. Alternatively, a first negative active material layer and a second negative active material layer may be sequentially formed on one side of the current collector, and a first negative active material layer and a second negative active material layer may be sequentially formed on other side corresponding to the side of the current collector.

The magnet may have strength of a magnetic field of about 1000 Gauss to about 10000 Gauss. In addition, the negative active material composition may be coated on the current collector and maintained for about 3 seconds to about 15 seconds, that is, may be exposed to the magnetic field for about 3 seconds to about 15 seconds. In one embodiment, the time for exposing to the magnetic field may be about 3 seconds to about 12 seconds. Depending on the time for exposing to the magnetic field, the obtained DD value may be varied.

Furthermore, the DD value may be also obtained by adjusting a viscosity of the second negative active material layer composition.

The viscosity of the second negative active material layer composition may be about 2000 cps to about 4000 cps, about 2000 cps to about 3500 cps, or about 2500 cps to about 3500 cps at room temperature (about 20 °C to about 25 °C)

Furthermore, the viscosity of the first negative active material layer composition may be about 2000 cps to about 4000 cps, about 2000 cps to 3500 cps, or about 2000 cps to about 2500 cps at room temperature (about 20 °C to about 25 °C).

The viscosities of the first negative active material layer composition and the second negative active material layer composition may be controlled within the range.

When the viscosities of the first negative active material layer composition and the second negative active material layer composition satisfy the range, the first negative active material layer and the second negative active material layer with the desired DD values and the difference of the DD value may be obtained. Lower viscosity of the second negative active material layer composition than the range may cause an extreme increase in a degree of vertically of the crystalline carbon-based negative active material included in the second negative active material layer to cause a poor contact of the negative active material particle, and thus, the electron transference resistance may be increased, whereas higher viscosity than the range may fade the effect from orientation, thereby reducing the impregnability of the electrolyte.

The first negative active material layer composition and the second negative active material composition respectively may be prepared by mixing the negative active material, a binder and a conductive material in a solvent.

The solvent may be an organic solvent such as N-methyl pyrrolidone, or water, and when the aqueous binder is used as the binder, the solvent may be water.

A rechargeable lithium secondary battery according to another embodiment includes the negative electrode,

a positive electrode, and an electrolyte.

The positive electrode may include a current collector and a positive active material layer formed on the current collector.

The positive electrode active material may include lithiated intercalation compounds that reversibly intercalate and deintercalate lithium ions, and specifically, one or more composite oxides of a metal selected from cobalt, manganese, nickel, and a combination thereof, and lithium may be used. More specifically, the compounds represented by one of the following chemical formulae may be used. $Li_aA_{1-b}X_bD^1_2$ ($0.90 \leq a \leq 1.8$, $0 \leq b \leq 0.5$); $Li_aA_{1-b}X_bO_{2-c1}D^1_{c1}$ ($0.90 \leq a \leq 1.8$, $0 \leq b \leq 0.5$, $0 \leq c1 \leq 0.05$); $Li_aE_{1-b}X_bO_{2-c1}D^1_{c1}$ ($0.90 \leq a \leq 1.8$, $0 \leq b \leq 0.5$, $0 \leq c1 \leq 0.05$); $Li_aE_{2-b}X_bO_{4-c1}D^1_{c1}$ ($0.90 \leq a \leq 1.8$, $0 \leq b \leq 0.5$, $0 \leq c1 \leq 0.05$); $Li_aNi_{1-b-c}Co_bX_cD^1_\alpha$ ($0.90 \leq a \leq 1.8$, $0 \leq b \leq 0.5$, $0 \leq c \leq 0.5$, $0 < \alpha \leq 2$); $Li_aNi_{1-b-c}Co_bX_{c2-\alpha}T_\alpha$ ($0.90 \leq a \leq 1.8$, $0 \leq b \leq 0.5$, $0 \leq c \leq 0.5$, $0 < \alpha < 2$); $Li_aNi_{1-b-c}Co_bX_cO_{2-\alpha}T_2$ ($0.90 \leq a \leq 1.8$, $0 \leq b \leq 0.5$, $0 \leq c \leq 0.5$, $0 < \alpha < 2$); $Li_aNi_{1-b-c}Mn_bX_cD^1_\alpha$ ($0.90 \leq a \leq 1.8$, $0 \leq b \leq 0.5$, $0 \leq c \leq 0.5$, $0 < \alpha \leq 2$); $Li_aNi_{1-b-c}Mn_bX_cO_{2-\alpha}T_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}T_2$ ($0.90 \leq a \leq 1.8$, $0 \leq b \leq 0.5$, $0 \leq c \leq 0.5$, $0 < \alpha < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCo_cL^1_dG_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$) $Li_aCoG_bO_2$ ($0.90 \leq a \leq 1.8$, $0.001 \leq b \leq 0.1$) $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $QO_2$; $QS_2$; $LiQS_2$; $V_2O_5$; $LiV_2O_5$; $LiZO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); $Li_aFePO_4$ ($0.90 \leq a \leq 1.8$)

In the above chemical formulae, A is selected from Ni, Co, Mn, or combinations thereof; X is selected from Al, Ni, Co, Mn, Cr, Fe, Mg, Sr, V, a rare earth element, or combinations thereof; $D^1$ is selected from O, F, S, P, or combinations thereof; E is selected from Co, Mn, or combinations thereof; T is selected from F, S, P, or combinations thereof; G is selected from Al, Cr, Mn, Fe, Mg, La, Ce, Sr, V, or combinations thereof; Q is selected from Ti, Mo, Mn, or combinations thereof; Z is selected from Cr, V, Fe, Sc, Y, or combinations thereof; J is selected from V, Cr, Mn, Co, Ni, Cu, or combinations thereof; $L^1$ is selected from Mn, Al or combinations thereof.

Also, the compounds may have a coating layer on the surface, or may be mixed with another compound having a coating layer. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and, for example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive active material particles with one another and with a current collector. Examples of the binder may be polyvinyl alcohol, carboxylmethyl cellulose, hydroxypropyl cellulose, diacetyl cellulose, polyvinylchloride, carboxylated polyvinylchloride, polyvinyl fluoride, an ethylene oxide-containing polymer, polyvinyl pyrrolidone, polyurethane, polytetrafluoroethylene, polyvinylidene fluoride, polyethylene, polypropylene, styrene-butadiene rubber, acrylated styrene-butadiene rubber, an epoxy resin, nylon, and the like, but is not limited thereto.

The conductive material is included to provide electrode conductivity, and any electrically conductive material may be used as a conductive material unless it causes a chemical change. Examples of the conductive material include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may be an aluminium foil, a nickel foil, or combinations thereof, but is not limited thereto.

The positive active material layer and the negative active material may be prepared by mixing the active material, the binder and optionally, the conductive material in a solvent to prepare an active material composition and coating the active material composition on the current collector

Such an active material layer preparation method is well known in the related art so that the detailed description will be omitted in the specification. The solvent may be N-methyl pyrrolidone, and the like, but is not limited thereto. When the aqueous binder is used in the negative active material layer, water may be used as a solvent used in the negative active material composition preparation.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based,

alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, propyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. Furthermore, the ketone-based solvent may include cyclohexanone, and the like. In addition, the alcohol-based solvent may include ethanol, isopropyl alcohol, and the like, and the aprotic solvent may include nitriles such as R-CN (where R is a C2 to C20 linear, branched, or cyclic hydrocarbon, and may include a double bond, an aromatic ring, or an ether bond), amides such as dimethylformamide, and the like, dioxolanes such as 1,3-dioxolane, 1,4-dioxolane, and the like, sulfolanes, and the like.

The organic solvent may be used alone or in a mixture. When the organic solvent is used in a mixture, the mixture ratio may be controlled in accordance with a desirable battery performance and it may be well known to one in related art.

Furthermore, the carbonate-based solvent may include a mixture with a cyclic carbonate and a linear carbonate. The cyclic carbonate and linear carbonate are mixed together in a volume ratio of about 1:1 to about 1:9, and when the mixture is used as an electrolyte, it may have enhanced performance.

When the non-aqueous organic solvents are mixed and used, a mixed solvent of cyclic carbonate and linear carbonate, a mixed solvent of cyclic carbonate and a propionate-based solvent, or a mixed solvent of cyclic carbonate, linear carbonate and a propionate-based solvent may be used. The propionate-based solvent may include methyl propionate, ethyl propionate, propyl propionate, or combinations thereof.

Herein, when a mixture of cyclic carbonate and linear carbonate, or a mixture of cyclic carbonate and propionate-based solvent is used, it may be desirable to use it with a volume ratio of about 1:1 to about 1:9 considering the performances. Furthermore, cyclic carbonate, linear carbonate and a propionate-based solvent may be mixed and used at a volume ratio of 1:1:1 to 3:3:4. The mixing ratio of the solvents may be also appropriately adjusted according to the desired properties.

The non-aqueous organic solvent may further include an aromatic hydrocarbon-based solvent as well as the carbonate-based solvent. Herein, the carbonate-based solvent and the aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

[Chemical Formula 1]

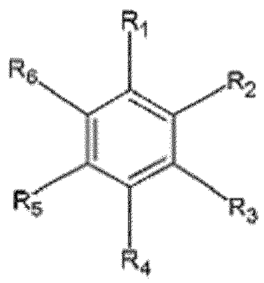

(in Chemical Formula 1, $R_1$ to $R_6$ are the same or different and are selected from hydrogen, a halogen, a C1 to C10 alkyl group, a haloalkyl group, and a combination thereof.)

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, or combiations thereof.

The electrolyte may further include vinylene carbonate, or an ethylene carbonate-based compound represented by Chemical Formula 2, as an additive for improving cycle life.

[Chemical Formula 2]

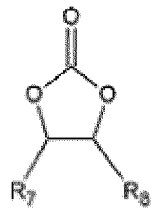

(in Chemical Formula 2, $R_7$ and $R_8$ are the same or different and may be each independently hydrogen, a halogen, a cyano group (CN), a nitro group ($NO_2$), or a C1 to C5 fluoroalkyl group, provided that at least one of $R_7$ and $R_8$ is a halogen, a cyano group (CN), a nitro group ($NO_2$), or a C1 to C5 fluoroalkyl group, and $R_7$ and $R_8$ are not simultaneously hydrogen.)

Examples of the ethylene carbonate-based compound may include difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate, and the like. In cases of further using the additive for improving cycle life, the used amount thereof may be appropriately adjusted.

The electrolyte may further include vinylethylene carbonate, propane sultone, succinonitrile, or combinations thereof, and herein, the used amount may be suitably adjusted.

The lithium salt dissolved in an organic solvent supplies a battery with lithium ions, basically operates the rechargeable lithium battery, and improves transportation of the lithium ions between positive and negative electrodes. Examples of the lithium salt may include one or two selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$ (lithium bis(fluorosulfonyl)imide: LiFSI), $LiC_4F_9SO_3$, $LiClO_4$, $LiAlO_2$, $LiAlCl_4$, $LiPO_2F_2$, $LiN(C_xF_{2x+1}SO_2)(C_yF_{2y+1}SO_2)$, where x and y are natural numbers, for example integers of 1 to 20), lithium difluoro(bisoxolato) phosphate), LiCl, LiI, $LiB(C_2O_4)_2$ (lithium bis(oxalato) borate: LiBOB) and lithium difluoro(oxalate) borate (LiDFOB), as a supporting electrolytic salt. A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The lithium secondary battery may further include a separator between the negative electrode and the positive electrode, depending on a kind of the battery. Examples of a separator material include polyethylene, polypropylene, polyvinylidene fluoride, and multi-layers having two or more layers thereof such as a polyethylene/polypropylene double-layered separator, a polyethylene/polypropylene/polyethylene triple-layered separator, and a polypropylene/polyethylene/polypropylene triple-layered separator.

FIG. 4 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 4, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20 and the separator 30.

Hereinafter, examples of the present invention and comparative examples are described. These examples, however, are not in any sense to be interpreted as limiting the scope of the invention.

(Example 1)

5 wt% of a Si-based negative active material including a silicon core and a soft carbon amorphous carbon layer positioned on the core, 92 wt% of artificial graphite, 2 wt% of a styrene butadiene rubber binder and 1 wt% of a carboxymethyl cellulose thickener were mixed in a water solvent to prepare a first negative active material layer slurry, with a viscosity of 3000 cps (at 25 °C).

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a second negative active material layer slurry, with a viscosity of 3000 cps (at 25 °C). The first negative active material layer slurry was coated on a Cu foil without applying the magnetic field, and dried to prepare a first negative active material layer with a thickness of 15 μm.

Thereafter, the Cu foil on which the first negative active material layer was formed was disposed on a magnet having a magnetic field strength of 6000 Gauss, while the Cu foil was moved, the second negative active material slurry

was coated on the first negative active material layer to expose a magnetic field for 10 seconds, and dried to prepare a second negative active material layer with a thickness of 80 μm, thereby obtaining a negative electrode.

96 wt% of a $LiCoO_2$ positive active material, 2 wt% of a carbon black conductive agent, and 2 wt% of a polyvinylidene fluoride binder were mixed in an N-methyl pyrrolidone solvent to prepare a positive active material slurry. The slurry was coated on an Al current collector, dried, and pressurized to prepare a positive electrode.

Using the negative electrode, the positive electrode, and an electrolyte, a rechargeable lithium cell (full cell) was fabricated. The electrolyte was prepared by using a mixed solvent of ethylene carbonate and diethyl carbonate (50 : 50 of a volume ratio) and dissolving 1.5 M $LiPF_6$ therein.

(Example 2)

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a first negative active material layer slurry, with a viscosity of 3000 cps (at 25 °C).

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a second negative active material layer slurry, with a viscosity of 3000 cps (at 25 °C).

The first negative active material layer slurry was coated on a Cu foil without applying a magnetic field, and dried to prepare a first negative active material layer with a thickness of 15 μm.

Thereafter, the Cu foil on which the first negative active material layer was formed was disposed on a magnet having a magnetic field strength of 6000 Gauss, while the Cu foil was moved, the second negative active material slurry was coated on the first negative active material layer to expose a magnetic field for 8 seconds, and dried to prepare a second negative active material layer with a thickness of 80 μm, thereby obtaining a negative electrode.

Using the negative electrode, and the positive electrode and the electrolyte used in Example 1, a rechargeable lithium cell was fabricated by the same procedure as in Example 1.

(Example 3)

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a first negative active material layer slurry, with a viscosity of 3000 cps (at 25 °C).

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a second negative active material layer slurry, with a viscosity of 3000 cps (at 25 °C).

The first negative active material layer slurry was coated on a Cu foil without applying a magnetic field, and dried to prepare a first negative active material layer with a thickness of 15 μm.

Thereafter, the Cu foil on which the first negative active material layer was formed was disposed on a magnet having a magnetic field strength of 6000 Gauss, while the Cu foil was moved, the second negative active material slurry was coated on the first negative active material layer to expose a magnetic field for 5 seconds, and dried to prepare a second negative active material layer with a thickness of 80 μm, thereby obtaining a negative electrode.

Using the negative electrode, and the positive electrode and the electrolyte used in Example 1, a rechargeable lithium cell was fabricated by the same procedure as in Example 1.

(Comparative Example 1)

After the Cu foil was disposed on a magnet having a magnetic field strength of 6000 Gauss, while the Cu foil was moved, the first negative active material slurry according to Example 1 was coated on the Cu foil to expose a magnetic field for 10 seconds, and dried to prepare a negative active material layer with a thickness of 80 μm. The resulting product was used as a negative electrode.

Using the negative electrode, and the positive electrode and the electrolyte used in Example 1, a rechargeable lithium cell was fabricated by the same procedure as in Example 1.

(Comparative Example 2)

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a first negative active material layer slurry, with a viscosity of 3000 cps (at 25 °C).

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a second negative active material layer slurry, with a viscosity of 3000 cps (at 25 °C).

After the Cu foil was disposed on a magnet with a magnetic field strength of 6000 Gauss, while the Cu foil was moved, the first negative active material slurry was coated on the Cu foil to expose a magnetic field for 8 seconds, and dried to prepare a first negative active material layer with a thickness of 15 μm.

Thereafter, the second negative active material layer slurry was coated on the first negative active material layer and exposed to a magnetic field for 10 second, followed by drying to prepare a second negative active material layer with a thickness of 80 μm, thereby obtaining a negative electrode.

Using the negative electrode, and the positive electrode and the electrolyte used in Example 1, a rechargeable lithium cell was fabricated by the same procedure as in Example 1.

(Comparative Example 3)

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a first negative active material layer slurry, with a viscosity of 3000 cps (at 25 °C).

5 wt% of a Si-based negative active material including a silicon core and a soft carbon amorphous carbon layer positioned on the core, 91 wt% of artificial graphite, 2 wt% of a styrene butadiene rubber binder and 2 wt% of a carboxymethyl cellulose thickener were mixed in a water solvent to prepare a second negative active material layer slurry, with a viscosity of 3000 cps (at 25 °C).

After the Cu foil was disposed on a magnet having a magnetic field strength of 6000 Gauss, while the Cu foil was moved, the first negative active material slurry was coated on the Cu foil to expose a magnetic field for 10 seconds, and dried to prepare a first negative active material layer with a thickness of 15 μm.

Thereafter, the magnet was removed, under the condition of no applied magnetic field, the second negative active material layer slurry was coated on the first negative active material layer, dried and pressurized, to prepare a negative active material layer, thereby obtaining a negative electrode.

Using the negative electrode, and the positive electrode and the electrolyte used in Example 1, a rechargeable lithium cell was fabricated by the same procedure as in Example 1.

<u>Experimental Example 1) Measurement of X-ray diffraction characteristic</u>

The rechargeable lithium cells according to Example 1 to 3 and Comparative Examples 1 to 3 were charged and discharged at 0.1 C twice, and fully discharged at 0.1 C to 2.75 V. The fully-discharged battery cells were disassembled to obtain negative electrodes. As for these negative electrodes, X'Pert (PANalytical B.V.) XRD equipment using a CuKα ray as a target ray was used, but monochromator equipment was removed in order to improve a peak intensity resolution, and then an XRD was measured. Herein, the measurement was performed under a condition of 2θ = 10° to 80°, a scan speed (°/S) = 0.06436, and a step size of 0.026°/step.

From the measured XRD results, the DD values of each layers were calculated, and the results are shown in Table 1.

The areas of the peaks shown at 2θ = 26.5±0.2° ((002) plane), 42.4±0.2° ((100) plane), 43.4±0.2° ((101) R plane), 44.6±0.2° ((101) H plane), 54.7±0.2° ((004) plane), and 77.5±0.2° ((110) plane) were measured, and the area sum of peaks shown at 2θ = 42.4±0.2° ((100) plane), 43.4±0.2° ((101)R plane), 44.6±0.2° ((101)H plane), and 77.5±0.2° ((110) plane) as $I_a$, and the area sum of peaks shown at 2θ = 26.5±0.2° ((002) plane), 42.4±0.2° ((100) plane), 43.4±0.2° ((101)R plane), 44.6±0.2° ((101)H plane), 54.7±0.2° ((004) plane), and 77.5±0.2° ((110) plane) as $I_{total}$, and DD ($I_{total}/I_a$) was obtained by calculating from the values.

From the DD values of the first and second negative active material layers, an A value expressed in Equation 1 was measured. The results are shown in Table 1.

[Equation 1]

$$A \geq 10$$

(in Equation 1, the A is a DD value of the second negative active material layer-a DD value of the first negative active material layer)

(Table 1)

| | DD value of first negative active material layer | DD value second negative active material layer | A |
|---|---|---|---|
| Example 1 | 24 | 46 | 22 |
| Example 2 | 20 | 35 | 15 |
| Example 3 | 20 | 30 | 10 |
| Comparative Example 1 | 48 (oriented single layer) | | 0 |
| Comparative Example 2 | 40 | 46 | 6 |
| Comparative Example 3 | 46 | 24 | -22 |

As shown in the Table 1, the negative electrodes according to Examples 1 to 3 in which only the second negative active material layer was formed under the condition of applying a magnetic field had the A value of 10 to 22. However, the negative electrode according to Comparative Example 2 in which the first and second negative active material layers were both formed under the condition of applying a magnetic field had the A value of 6, which was very low. Furthermore, in Comparative Example 3, as the first negative active material layer was formed under the condition of applying a magnetic field, the DD value of the first negative active material was larger than the DD value of the second negative active material layer, and resultantly, the A value was found to be -22.

Experimental Example 2) Evaluation of the thickness of the negative electrode

The thicknesses of the negative electrodes according to Examples 1 to 3 and Comparative Examples 1 to 3 were measured. Furthermore, the rechargeable lithium cells according to Examples 1 to 3 and Comparative Examples 1 to 3 were charged under a SOC30 (charged to be 30 % of charge capacity based on 100 % of entire battery charge capacity), the negative electrode was disassembled from the cell, and then the thickness of the negative electrode was measured.

The thickness of the negative electrode before charge and discharge is shown as a pressurization, and the thickness of the negative electrode after charge and discharge is shown as a SOC30 in Table 2.

(Table 2)

| | Pressurization (μm) | SOC30 (μm) | Thickness increase rate (%) |
|---|---|---|---|
| Example 1 | 192.3 | 221.7 | 15.3 |
| Example 2 | 193 | 223 | 15.5 |
| Example 3 | 193.5 | 221 | 14.2 |
| Comparative Example 1 | 193.9 | Sever separation | Impossible to measure |
| Comparative Example 2 | 193.1 | Sever separation | Impossible to measure |
| Comparative Example 3 | 193.6 | 228.3 | 17.9 |

As shown in Table 2, the negative electrodes according to Examples 1 to 3 in which the A value were 10 or

more, exhibited the thickness increase rate of 14.2% to 15.3%, as the repeated charge and discharge. Meanwhile, Comparative Example 1 with an oriented single layer or Comparative Example 2 with an A value of 6 exhibited the severe separation of the negative active material layer during charge and discharge, and thus, it was impossible to measure the thickness increase rate. In addition, Comparative Example 3, in which the first negative active material layer was an oriented layer, also exhibited a high thickness increase rate.

Experimental Example 3) Measurement of expansion rate

The rechargeable lithium cells according to Examples 1 to 3 and Comparative Examples 1 to 3 were charged and discharged at 1C under a condition of SOC100 (fully charge, charged to be 100 % of charge capacity based on 100 % of entire battery charge capacity). A ratio of the cell thickness after full charge to the cell thickness before charge and discharge was measured. The results are shown in Table 3 as an expansion rate.

(Table 3)

| | Expansion rate (%) |
|---|---|
| Example 1 | 18.5 |
| Example 2 | 19.2 |
| Example 3 | 20.4 |
| Comparative Example 1 | Separation |
| Comparative Example 2 | Separation |
| Comparative Example 3 | 22.4 |

Among the results, the separation state of the negative electrode of Comparative Example 2 after fully-charging is shown in FIG. 5. Comparative Example 2 with the A value of 6 in Equation 1 caused the separation of the negative active material layer, as shown in FIG. 5.

While this invention has been described in connection with what is presently considered to be practical example embodiments, it is to be understood that the invention is not limited to the disclosed embodiments, but, on the contrary, is intended to cover various modifications and equivalent arrangements included within the scope of the appended claims. Therefore, the aforementioned embodiments should be understood to be examples but not limiting the present invention in any way.

**Claims**

**1.** A negative electrode for a rechargeable lithium battery, comprising:

a current collector;
a first negative active material layer positioned on at least one surface of the current collector; and
a second negative active material layer positioned on the first negative active material layer,
wherein the first negative active material layer is a non-oriented layer,
the second negative active material layer is an oriented layer,
a DD (Degree of Divergence) value of the first negative active material layer and a DD value of the second negative active material layer have a relationship expressed in Equation 1, and
the DD value is defined by Equation 2

[Equation 1]

$$A \geq 10$$

wherein, in Equation 1, A is the DD value of the second negative active material layer-the DD value of the first negative active material layer

[Equation 2]

$$DD\ (\text{Degree of Divergence}) = (I_a/I_{total}) * 100$$

wherein, in Equation 2,
$I_a$ is a sum of peak intensities at non-planar angles measured by XRD using a CuKα ray, and
$I_{total}$ is a sum of peak intensities at all angles measured by XRD using a CuKα ray.

**2.** The negative electrode for a rechargeable lithium battery of claim 1, wherein A is about 10 to about 40.

**3.** The negative electrode for a rechargeable lithium battery of claim 1 or claim 2, wherein the DD value of the first negative active material layer is less than about 30.

**4.** The negative electrode for a rechargeable lithium battery of claim 1 or claim 2, wherein the DD value of the first negative active material layer is less than about 30, and about 10 or more.

**5.** The negative electrode for a rechargeable lithium battery of any one of claims 1 to 4, wherein the DD value of the second negative active material layer is about 30 or more.

**6.** The negative electrode for a rechargeable lithium battery of any one of claims 1 to 4, wherein the DD value of the second negative active material layer is about 30 to about 60.

**7.** The negative electrode for a rechargeable lithium battery of any one of claims 1 to 6, wherein the first negative active material layer has a thickness of about 10 μm to about 30 μm.

**8.** The negative electrode for a rechargeable lithium battery of any one of claims 1 to 7, wherein the $I_a$ is a sum of peak intensities at $2\theta = 42.4\pm0.2°$, $43.4\pm0.2°$, $44.6\pm0.2°$, and $77.5\pm0.2°$ measured by XRD using a CuKα ray,
the $I_{total}$ is a sum of peak intensities at $2\theta=26.5\pm0.2°$, $42.4\pm0.2°$, $43.4\pm0.2°$, $44.6\pm0.2°$, $54.7\pm0.2°$, and $77.5\pm0.2°$ measured by XRD using a CuKα ray.

**9.** The negative electrode for a rechargeable lithium battery of any one of claims 1 to 8, wherein the peak intensities are peak integral area values.

**10.** The negative electrode for a rechargeable lithium battery of any one of claims 1 to 9, wherein the first negative active material layer or the second negative active material layer includes a crystalline carbon-based negative active material.

**11.** The negative electrode for a rechargeable lithium battery of any one of claims 1 to 9, wherein the first negative active material layer or the second negative active material layer includes a crystalline carbon-based negative active material and a Si-based negative active material.

**12.** The negative electrode for a rechargeable lithium battery of claim 11, wherein a mixing ratio of the crystalline carbon-based negative active material and the Si-based negative active material is about 98 : 2 to about 90 : 10 weight ratio.

**13.** The negative electrode for a rechargeable lithium battery of claim 11 or claim 12, wherein the Si-based negative active material is Si, a Si-C composite, $SiO_x$ ($0<x<2$), Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof but not Si), or combinations thereof.

**14.** A rechargeable lithium battery, comprising

a negative electrode of any one of claim 1 to claim 13;
a positive electrode comprising a positive active material; and
a non-aqueous electrolyte.

FIG. 1

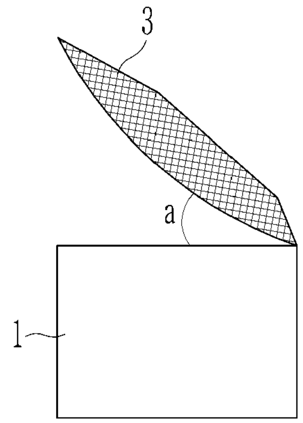

FIG. 2

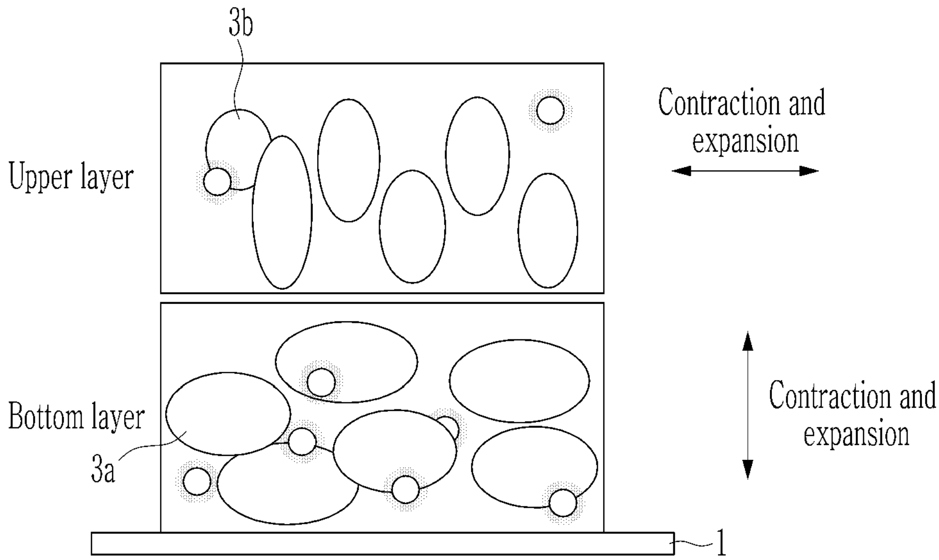
3b
Upper layer
Contraction and expansion
Bottom layer
3a
Contraction and expansion
1

FIG. 3

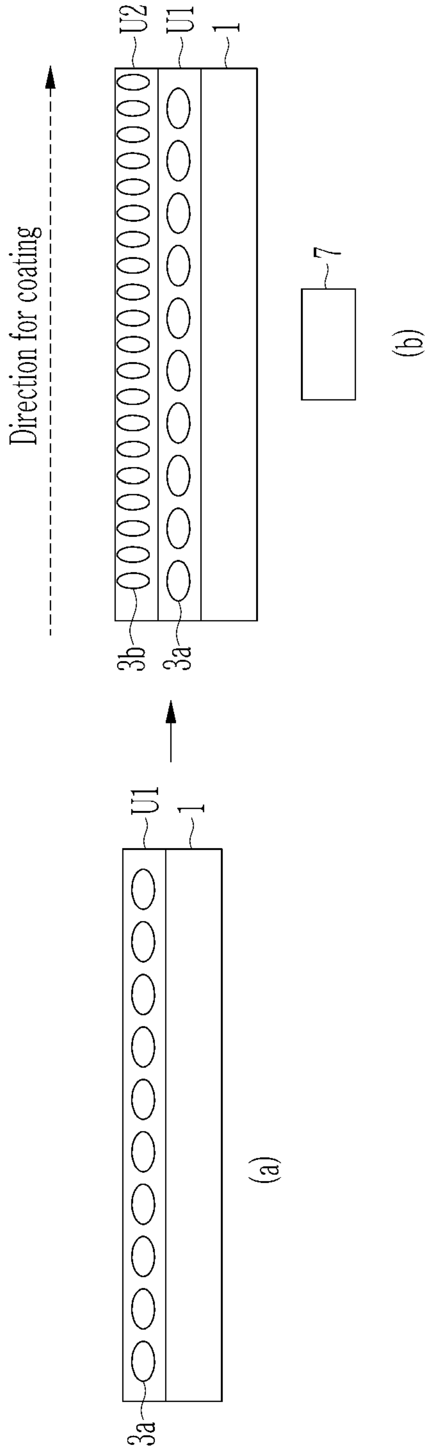

FIG. 4

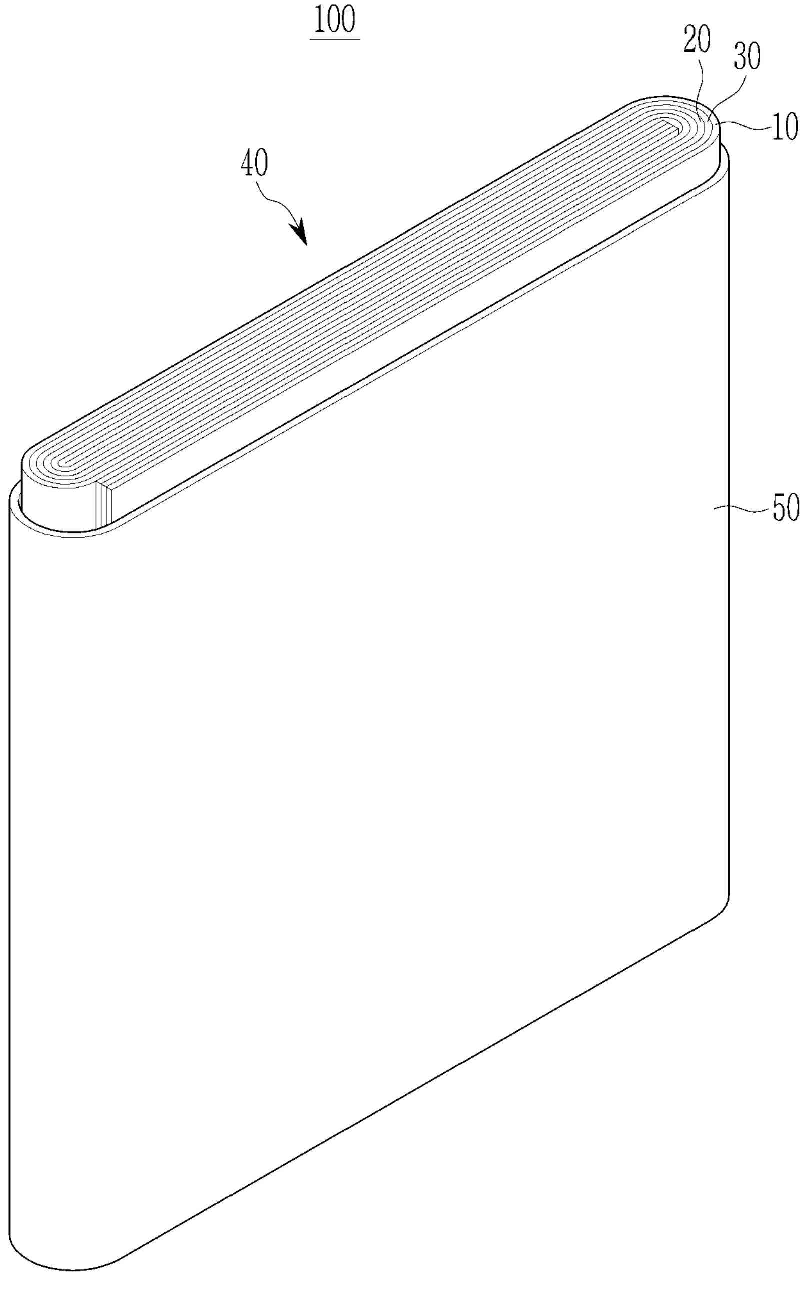

FIG. 5

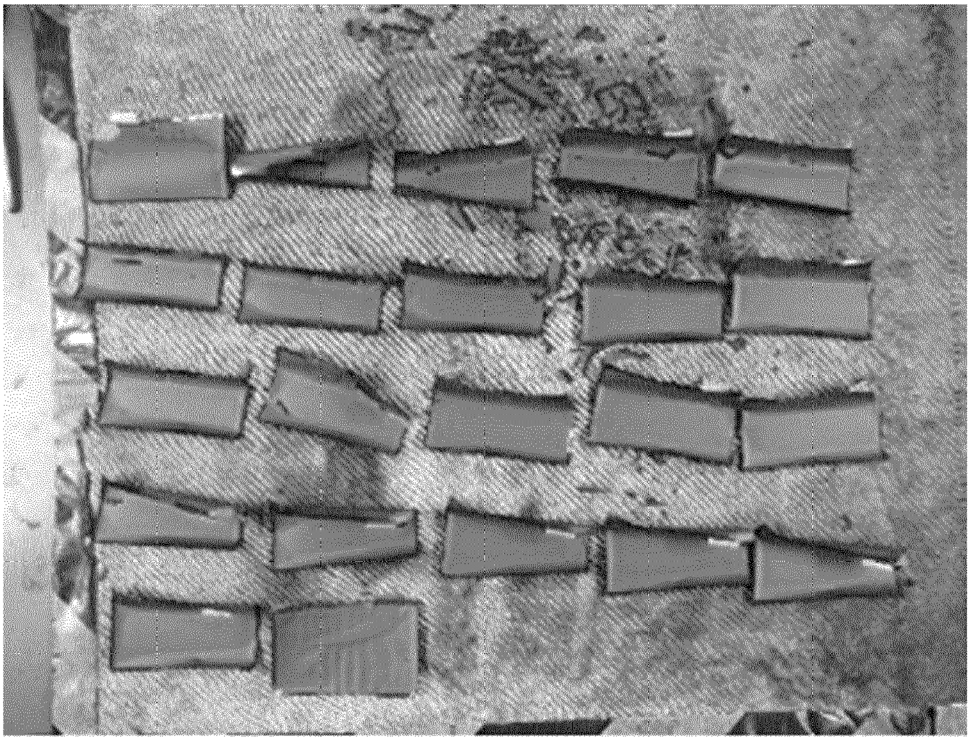

European Patent Office

# EUROPEAN SEARCH REPORT

Application Number
EP 23 19 4384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 961 759 A1 (SAMSUNG SDI CO LTD [KR]) 2 March 2022 (2022-03-02) * paragraphs [0026] - [0029], [0050] - [0052], [0113], [0126] - [0131], [0140] * | 1-14 | INV. H01M4/02 H01M4/04 H01M4/134 H01M4/1395 H01M4/36 H01M4/38 H01M4/62 |
| X | EP 3 961 758 A1 (SAMSUNG SDI CO LTD [KR]) 2 March 2022 (2022-03-02) | 1-6,8-14 | |
| A | * paragraphs [0007], [0008], [0013] - [0016], [0028], [0045] - [0047], [0062], [0101] - [0105], [0154] * | 7 | |
| A | EP 4 044 275 A1 (LG ENERGY SOLUTION LTD [KR]) 17 August 2022 (2022-08-17) * paragraphs [0036], [0065] * | 1-14 | |

TECHNICAL FIELDS SEARCHED (IPC)

H01M

The present search report has been drawn up for all claims

| Place of search | Date of completion of the search | Examiner |
|---|---|---|
| Munich | 18 March 2024 | Posch, Patrick |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 4384

This annex lists the patent family members relating to the patent documents cited in the above-mentioned European search report. The members are as contained in the European Patent Office EDP file on
The European Patent Office is in no way liable for these particulars which are merely given for the purpose of information.

18-03-2024

| Patent document cited in search report | Publication date | Patent family member(s) | Publication date |
|---|---|---|---|
| EP 3961759 A1 | 02-03-2022 | CN 113711386 A | 26-11-2021 |
| | | EP 3961759 A1 | 02-03-2022 |
| | | JP 7246520 B2 | 27-03-2023 |
| | | JP 2022530081 A | 27-06-2022 |
| | | KR 20200124514 A | 03-11-2020 |
| | | KR 20230075384 A | 31-05-2023 |
| | | US 2022263063 A1 | 18-08-2022 |
| | | WO 2020218780 A1 | 29-10-2020 |
| EP 3961758 A1 | 02-03-2022 | CN 113728461 A | 30-11-2021 |
| | | EP 3961758 A1 | 02-03-2022 |
| | | JP 7246521 B2 | 27-03-2023 |
| | | JP 2022530082 A | 27-06-2022 |
| | | KR 20200124513 A | 03-11-2020 |
| | | US 2022209217 A1 | 30-06-2022 |
| | | WO 2020218773 A1 | 29-10-2020 |
| EP 4044275 A1 | 17-08-2022 | CN 114730859 A | 08-07-2022 |
| | | EP 4044275 A1 | 17-08-2022 |
| | | JP 2023502611 A | 25-01-2023 |
| | | KR 20210130659 A | 01-11-2021 |
| | | US 2022384790 A1 | 01-12-2022 |
| | | WO 2021215830 A1 | 28-10-2021 |



For more details about this annex : see Official Journal of the European Patent Office, No. 12/82